# EUROPÄISCHE PATENTSCHRIFT

(11) **EP 0 502 302 B1**
(45) Veröffentlichungstag und Bekanntmachung des Hinweises auf die Patenterteilung: **23.11.1994**
(21) Anmeldenummer: 92101152.4
(22) Anmeldetag: 24.01.1992
(51) Int. Cl.: E04F 13/08, F16B 13/00, E04B 1/76

(54) **Verblendanker aus Kunststoff**
Plastic facing anchor
Ancrage en plastique pour parement

(30) Priorität: 02.03.1991 DE 4106671
(43) Veröffentlichungstag der Anmeldung: 09.09.1992
(73) Patentinhaber: fischerwerke Artur Fischer GmbH & Co. KG, D-72178 Waldachtal (DE)
(72) Erfinder: Axt, Dieter, W-7244 Waldachtal 1 (DE); Haage, Manfred, Dipl.-Ing., W-7295 Dornstetten/Ach (DE); Güth, Harald, W-7244 Waldachtal 2 (DE); Mäder, Eberhard, W-7241 Eutingen (DE)

(56) Entgegenhaltungen:
- EP-A- 0 131 747
- CH-A- 635 907
- DE-A- 3 717 429
- DE-B- 1 180 386
- DE-U- 8 606 959
- FR-A- 2 587 269
- GB-A- 2 137 254
- LU-A- 87 760

## Beschreibung

Die Erfindung betrifft einen Verblendanker aus Kunststoff mit einem Dämmstoffteller am Kopfende zur Halterung von Dämmstoffplatten gemäß der Gattung des Anspruches 1.

Zur Befestigung von Dämmstoffplatten werden Verblendanker verwendet, die im Anschluß an den die Dämmstoffplatte durchdringenden Schaft ein mit einem Längsschlitz versehenes Verankerungsteil aufweisen, das in ein vorbereitetes Bohrloch der Wand eingesetzt und dort durch Eintreiben eines Spreizelementes oder Drahtankers durch Verspreizen festsetzbar ist. Ein solcher Verblendanker ist beispielsweise aus der LU-A 87 760 bekannt. Die Anwendung dieser Verblendanker geht stets von einer nachträglichen Anbringung der Dämmstoffplatten am Mauerwerk aus, was grundsätzlich eine Erstellung der Bohrlöcher für das Einsetzen der Verblendanker erforderlich macht. Bei Betonwänden, die in der Regel mit Armierungen versehen sind, bedeutet das Herstellen der Bohrlöcher für die Verblendanker einen erheblichen Aufwand. Wird der Verblendanker zusätzlich zur Abstützung und Halterung eines Verblendmauerwerks verwendet, muß der Verblendanker im Tragmauerwerk so verankert sein, daß die auf das Verblendmauerwerk wirkenden Kräfte weitgehendst schlupffrei aufgenommen werden können. Dies ist in der Regel mit aus Kunststoff bestehenden Verblendankern, die mit dem einzusetzenden Drahtanker verspreizt werden, nur in der Weise möglich, daß pro Flächeneinheit des Verblendmauerwerks eine größere Anzahl von Verblendankern gesetzt werden.

Der Erfindung liegt die Aufgabe zugrunde, einen einbetonierfähigen Verblendanker aus Kunststoff für zweischaliges Mauerwerk zu schaffen, mit dem eine dauerhafte und formschlüssige Verbindung zwischen Verblendmauerwerk und Tragmauerwerk herstellbar ist.

Die Lösung dieser Aufgabe wird bei einem Verblendanker der eingangs genannten Gattung durch die im kennzeichnenden Teil des Anspruches 1 angegebenen Merkmale erreicht. Die druckfesten Dämmstoffplatten werden mit den vollständig bis zur Anlage der Dämmstoffteller an der Außenseite der Dämmstoffplatte eingedrückten Verblendankern auf die Schalung für das Tragmauenwerk aufgebracht. Die Verankerungsteile der Verblendanker ragen somit in die Schalung hinein, so daß beim Ausgießen der Schalung das Verankerungsteil des Verblendankers in den Beton eingebunden wird. Durch die am Außenumfang angeordneten Sperrelemente des Verankerungsteiles ergibt sich nach dem Aushärten des Betons eine zug- und druckgesicherte formschlüssige Verankerung des Verblendankers im Tragmauerwerk.

Mit der massiv ausgebildeten Zuspitzung am vorderen Stirnende des Verankerungsteils läßt sich der Verblendanker ohne Vorbohren durch die Dämmstoffplatte soweit durchdrücken, bis der Dämmstoffteller an der Außenfläche der Dämmstoffplatte anliegt. Aufgrund der vollständig von einer Wandung umschlossenen Innenbohrung des Verankerungsteils wird beim Ausgießen der Schalung die Innenbohrung des Verblendankers von einlaufender Mörtelmischung freigehalten. Mit der zwischen Verankerungsteil und Schaft angeordneten und den Außendurchmesser des Schaftes radial überragenden umlaufenden Dichtlippe wird ferner die durch das Eindrücken des Verblendankers durch die Dämmstoffplatte entstandene Bohrung ebenfalls gegen die eindringende Mörtelmischung abgedichtet.

Mit dem über den Schaft mit dem Verankerungsteil verbundenen Dämmstoffteller sind die Dämmstoffplatten nach dem Ausschalen des Mauerwerks am Mauerwerk gehalten. In die Innenbohrung des Verankerungsteiles wird ein mit einem Schlaggewinde versehener Drahtanker eingetrieben, dessen freies, die Dämmstoffplatte überragendes Ende in die Fugen des Verblendmauerwerkes eingemörtelt wird. Um ausreichende Haltekräfte für den Drahtanker zu erreichen, ist die Innenbohrung im Verankerungsteil auf einen Durchmesser reduziert, der etwas kleiner ist als der Außendurchmesser des Schlaggewindes und vorzugsweise dem Kerndurchmesser des Schlaggewindes entspricht. Somit werden die auf das Verblendmauerwerk wirkenden Winddruck- und Sogkräfte über den Drahtanker und Verblendanker in das Tragmauerwerk eingeleitet.

Zur besseren Abdichtung und Durchdringung der Dämmstoffplatte kann die Dichtlippe in Richtung Verankerungsteil mit einer kegelstumpfartigen Verjüngung ausgestattet sein.

Zur Erhöhung der Verankerungswirkung des Verankerungsteiles sind die am Außenumfang angeordneten Sperrelemente vorzugsweise als umlaufende Wulste ausgebildet. Zur Verdrehsicherung des Verblendankers, beispielsweise zum Ausdrehen eines Drahtankers, können zwischen den Sperrelementen längslaufende Rippen angeordnet sein.

Schließlich können vor der Dichtlippe zwei sich gegenüberliegende, die Schaftwandung des Verblendankers durchdringende Querbohrungen angeordnet sein. Diese Querbohrungen entstehen durch eine Abstützung des Kerns für die Ausformung der Innenbohrung, der durch den geschlossenen Verankerungsteil nur einseitig im Spritzgußwerkzeug gelagert werden kann. Durch die Anordnung der Querbohrungen vor der Dichtungslippe und somit außerhalb des Verankerungsteiles wird verhindert, daß über die Querbohrungen beim Einmörteln des Verblendankers Material in die Innenbohrung eindringen kann.

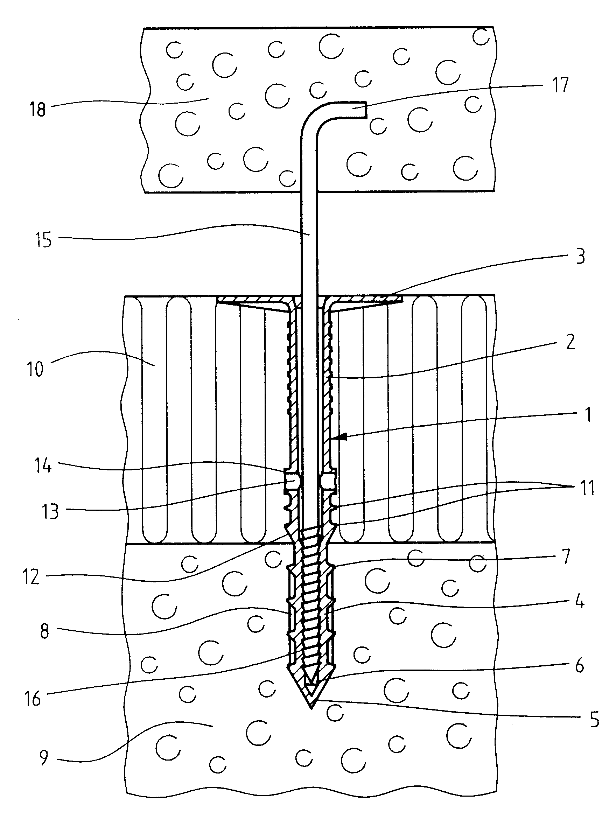

Die Erfindung wird nachfolgend anhand der Zeichnung näher erläutert.

Der aus Kunststoff im Spritzgußverfahren hergestellte Verblendanker 1 weist einen hülsenförmigen Schaft 2 auf, an dessen einem Ende ein scheibenförmiger Dämmstoffteller 3 und am anderen Ende ein Verankerungsteil 4 angeordnet ist. Die Stirnseite des Verankerungsteiles 4 ist mit einer Zuspitzung 5 versehen, die die Innenbohrung 6 des Verankerungsteiles verschließt, so daß beim Einbetonieren des Verblendankers in das Tragmauerwerk kein Mörtel in die Innenbohrung 6 des Verankerungsteiles 4 eindringen kann.

Zur Erzielung einer ausreichenden Verankerungswirkung ist das Verankerungsteil an seinem Außenumfang mit mehreren, als umlaufende Wulste ausgebildeten Sperrelementen 7 versehen. Zwischen diesen Wulsten sind zur Sicherung gegen Verdrehung des Verblendankers längsverlaufende Rippen 8 angeordnet.

Die Verankerung des Verblendankers erfolgt durch Einbetonieren des Verankerungsteiles 4 beim Auffüllen der Schalung des Tragmauerwerks 9 mit Mörtel. Die Schalungswände sind bereits mit den Dämmstoffplatten 10 ausgelegt, in denen die Verblendanker 1 soweit eingedrückt sind, daß die am Schaft 2 angeformten Dämmstoffteller der Verblendanker bündig mit der Außenfläche der Dämmstoffplatten abschließen. Aufgrund der Zuspitzung 5 ist das Durchdrücken der Verblendanker durch die Dämmstoffplatten ohne Vorbohrung möglich. Um beim Ausgießen der Schalung das Bohrloch in der Dämmstoffplatte gegen eindringenden Mörtel abzudichten, sind zwischen dem Verankerungsteil 4 und dem Schaft 2 zwei nacheinander angeordnete, umlaufende Dichtlippen 11 vorgesehen. Um das Eindrücken des Verblendankers durch die Dämmstoffplatte zu erleichtern, ist es zweckmäßig, zumindest die vordere Dichtlippe mit einer kegelstumpfartigen Verjüngung 12 in Richtung Verankerungsteil 4 auszustatten. Die vor den beiden Dichtlippen angeordneten Querbohrungen 13 mit Rand 14 dienen zur Abstützung des Kerns für die Innenbohrung bei der Herstellung des Verblendankers.

Nach der Aushärtung des Tragmauerwerks 9 und der Entfernung der Schalung wird der Drahtanker 15 mit seinem Einschlaggewinde 16 in die verengte Innenbohrung 6 des Verankerungsteiles 4 eingetrieben. Zur Halterung des Verblendmauerwerks 18 wird dann das abgebogene Ende 17 des Drahtankers in die Fugen des Verblendmauerwerks 18 eingemörtelt. Über den Drahtanker 15 und den Verblendanker 1 werden die auf das Verblendmauerwerk wirkenden Winddruck- und Sogkräfte in das Tragmauerwerk 9 eingeleitet.

## Patentansprüche

1. Verblendanker aus Kunststoff mit einem Dämmstoffteller (3) am Kopfende zur Halterung von Dämmstoffplatten (10) und einem hülsenförmigen, die Dämmstoffplatte durchdringenden Schaft (2), an den sich ein am Außenumfang Sperrelemente (7) aufweisendes Verankerungsteil (4) zum Eintreiben eines Drahtankers (15) anschließt, wobei das vordere Stirnende des Verankerungsteiles (4) mit einer massiv ausgebildeten Zuspitzung (5) versehen ist, **dadurch gekennzeichnet,** daß das Verankerungsteil (4) eine vollständig von einer Wandung umschlossene und bis zur Zuspitzung (5) reichende Innenbohrung (6) mit einem gegenüber dem Durchmesser der Innenbohrung des Schaftes (2) reduzierten Durchmesser aufweist, und daß zwischen Verankerungsteil (4) und Schaft (2) wenigstens eine den Außendurchmesser des Schaftes radial überragende umlaufende Dichtlippe (11) angeordnet ist.

2. Verblendanker nach Anspruch 1, **dadurch gekennzeichnet,** daß die Dichtlippe(11) in Richtung Verankerungsteil (4) eine kegelstumpfartige Verjüngung (12) aufweist.

3. Verblendanker nach Anspruch 1, **dadurch gekennzeichnet,** daß die am Verankerungsteil (4) angeordneten Sperrelemente (7) umlaufende Wulste sind.

4. Verblendanker nach Anspruch 1, **dadurch gekennzeichnet,** daß zwischen den Sperrelementen (7) längslaufende Rippen (8) angeordnet sind.

5. Verblendanker nach Anspruch 1, **dadurch gekennzeichnet,** daß vor der Dichtlippe (11) zwei sich gegenüberliegende, die Schafwandung durchdringende Querbohrungen (13) angeordnet sind.

## Claims

1. A facing-anchor of plastics material with an insulating plate (3) at its top end for holding insulation boards (10) and with a sleeve-like shank (2) which passes through the insulation board, adjoining which shank there is an anchoring part (4) for driving in a wire anchor (15), the anchoring part having locking elements (7) arranged on its outer periphery, and the leading end of the anchoring part (4) is provided with a pointed tip (5) of solid construction, characterized in that the anchoring part (4) has an inner bore (6) extending as far as the pointed tip (5) and completely enclosed by a wall, the inner bore having a diameter that is reduced compared with the diameter of the inner bore of the shank (2), and in that at least one circumferential sealing lip (11) projecting radially beyond the outer diameter of the shank is arranged between the anchoring part (4) and the shank (2).

2. A facing-anchor according to claim 1, characterized in that the sealing lip (11) has a truncated conical taper (12) in the direction of the anchoring part (4).

3. A facing-anchor according to claim 1, characterized in that the locking elements (7) arranged on the anchoring part (4) are circumferential enlargements.

4. A facing-anchor according to claim 1, characterized in that longitudinally extending ribs (8) are arranged between the locking elements (7).

5. A facing-anchor according to claim 1, characterized in that two opposing transverse bores (13) passing through the shank wall are arranged before the sealing lip (11).

## Revendications

1. Tirant d'ancrage en matière plastique pour parements, comprenant une rondelle (3) en un matériau d'isolation, à l'extrémité frontale, en vue de retenir des panneaux (10) en un matériau isolant, et un fût (2) en forme de douille, qui traverse le panneau en un matériau isolant et auquel se rattache une partie d'ancrage (4) présentant des éléments de blocage (7) sur le pourtour extérieur, en vue de l'enfoncement d'un piton d'ancrage (15) en fil métallique, l'extrémité frontale antérieure de la partie d'ancrage (4) étant pourvue d'une pointe (5) de réalisation massive, caractérisé par le fait que la partie d'ancrage (4) comporte un perçage intérieur (6) qui est intégralement entouré d'une paroi, s'étend jusqu'à la pointe (5) et présente un diamètre réduit par rapport au diamètre du perçage intérieur du fût (2) ; et par le fait qu'au moins une lèvre périphérique d'étanchement (11), saillant radialement au-delà du diamètre externe du fût, est interposée entre la partie d'ancrage (4) et le fût (2).

2. Tirant d'ancrage pour parements, selon la revendication 1, caractérisé par le fait que la lèvre d'étanchement (11) présente un rétrécissement (12) de type tronconique en direction de la partie d'ancrage (4).

3. Tirant d'ancrage pour parements, selon la revendication 1, caractérisé par le fait que les éléments de blocage (7) situés sur la partie d'ancrage (4) sont des bourrelets circonférentiels.

4. Tirant d'ancrage pour parements, selon la revendication 1, caractérisé par le fait que des nervures (8) s'étendant longitudinalement se trouvent entre les éléments de blocage (7).

5. Tirant d'ancrage pour parements, selon la revendication 1, caractérisé par le fait que deux canaux transversaux (13), situés en vis-à-vis et traversant la paroi du fût, sont ménagés avant la lèvre d'étanchement (11).
